# EUROPÄISCHE PATENTSCHRIFT

(11) **EP 1 162 076 B1**
(45) Veröffentlichungstag und Bekanntmachung des Hinweises auf die Patenterteilung: **18.09.2002**
(21) Anmeldenummer: 00810477.0
(22) Anmeldetag: 30.05.2000
(51) Int. Cl.: B41M 5/00, C01F 7/02, C09D 129/04, C01B 33/26, D21H 19/38, D21H 19/40, C01B 33/12, C08K 3/22

(54) **Farbstoffempfangsmaterial für den Tintenstrahldruck**
Dye-receiving material for ink-jet printing
Matériau récepteur d'encre pour l'impression par jet d'encre

(43) Veröffentlichungstag der Anmeldung: 12.12.2001
(73) Patentinhaber: ILFORD Imaging Switzerland GmbH, 1723 Marly 1 (CH)
(72) Erfinder: Steiger, Rolf Dr., 1724 Praroman (CH); Brugger, Pierre-Alain Dr., 1731 Ependes (CH)

(56) Entgegenhaltungen:
- EP-A- 0 875 394
- EP-A- 0 967 086
- WO-A-00/02736

## Beschreibung

### Technisches Gebiet

Die Erfindung bezieht sich auf Aufzeichnungsmaterialien für den Tintenstrahldruck sowie Beschichtungsmassen zur Herstellung von Tintenaufnahmeschichten für dieses Verfahren. Insbesondere bezieht sie sich auf Aufzeichnungsmaterialien, bei denen das darauf aufgezeichnete Bild in Aufsicht oder Durchsicht betrachtet wird und welche aus einem Träger und mindestens einer darauf aufliegenden Tintenaufnahmeschicht bestehen, wobei mindestens eine dieser Schichten eine Mischung wasserunlöslicher, anorganischer Oxide oder Oxide/hydroxide enthält.

### Stand der Technik

Die heute erhältlichen Aufzeichnungsmaterialien für den Tintenstrahldruck erfüllen nicht alle an sie gestellten Anforderungen, insbesondere besteht die Notwendigkeit, das Tintenaufnahmevermögen, die Tintenaufnahmegeschwindigkeit, die Bildqualität sowie die Licht- und Wasserbeständigkeit weiter zu verbessern. Eine bevorzugte Ausführungsform der Erfindung bezieht sich auf verbesserte Aufzeichnungsmaterialien mit ausgezeichneter Bildqualität, hohem Tintenaufnahmevermögen und rascher Tintenaufnahme. Insbesondere werden Aufzeichnungsmaterialien für den Tintenstrahl gesucht, bei denen die darauf hergestellten Bilder eine gute Wischfestigkeit aufweisen und bei denen das Bild auch im Kontakt mit Wasser oder Licht nicht verändert oder zerstört wird.

Es gibt zwei unterschiedliche Verfahren beim Tintenstrahldruck, nämlich den kontinuierlichen und den nichtkontinuierlichen Tintenstrahldruck.

Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden auf Grund vorgegebener digitaler Daten elektrisch aufgeladen und je nachdem, ob eine Bildstelle bedruckt oder nicht bedruckt werden soll, nach dem Durchgang durch ein statisches elektrisches Feld in einen Auffangbehälter abgelenkt oder auf eine bestimmte Stelle auf dem Aufzeichnungsmaterial gebracht.

Beim nichtkontinuierlichen Verfahren, dem sogenannten "Drop-on-demand"-Verfahren, wird ein Tintentröpfchen auf Grund vorgegebener digitaler Daten aus einer Düse ausgestossen und auf die gewünschte Stelle auf dem Aufzeichnungsmaterial aufgebracht. Ein Tröpfchen wird nur dann erzeugt und ausgestossen, wenn ein Bildpunkt dargestellt werden muss.

Die Erfindung bezieht sich auf Aufzeichnungsmaterialien und Beschichtungsmassen, die in beiden Verfahren verwendet werden können.

An Aufzeichnungsmaterialien für den Tintenstrahldruck werden hohe Ansprüche gestellt. Das erzeugte Bild muss unter anderem die folgenden Eigenschaften aufweisen:
- Hohe Auflösung
- Hohe Farbdichte
- Gute Farbwiedergabe
- Gute Wischfestigkeit
- Gute Wasserfestigkeit
- Hohe Lichtechtheit

Um dies zu erreichen, müssen die folgenden Bedingungen erfüllt werden:
1. Die Tinte muss vom Aufzeichnungsmaterial rasch absorbiert werden.
2. Die aufgespritzten Tintentröpfchen müssen auf dem Aufzeichnungsmaterial kreisförmig und genau begrenzt auseinanderlaufen.
3. Die Farbstoffdiffusion im Aufzeichnungsmaterial muss gering sein, damit der
   Durchmesser der Farbpunkte nicht mehr als nötig vergrössert wird.
4. Ein Tintenpunkt darf beim Überlappen mit einem vorher aufgebrachten Tintenpunkt diesen nicht beeinträchtigen oder verwischen.
5. Das Aufzeichnungsmaterial muss eine Oberfläche aufweisen, die eine hohe
   Dichte und Brillanz der Farben ermöglicht.
6. Das Aufzeichnungsmaterial muss vor und nach dem Bedrucken hervorragende physikalische Eigenschaften aufweisen.

Es handelt sich zum Teil um sich widersprechende Anforderungen, so bedeutet beispielsweise eine sehr schnelle Tintenaufnahme häufig eine Beeinträchtigung der Wischfestigkeit.

Ausgehend von den an das Aufzeichnungsmaterial gestellten Forderungen werden trotzdem Wege gesucht, die zu einem Bild mit möglichst hoher Farbdichte bei möglichst hoher Wischfestigkeit führen. Die besten Eigenschaften werden mit Aufzeichnungsmaterialien erreicht, bei denen auf einem Träger mindestens eine spezielle Tintenaufnahmeschicht aufgebracht ist.

In den Patentanmeldungen EP 0'298'424, EP 0'407'720, EP 0'622'244 und JP 60-245'588 werden Aufzeichnungsmaterialien für den Tintenstrahldruck vorgeschlagen, in dem die Tintenaufnahmeschicht kolloidales Aluminiumoxid/hydroxid mit Pseudoböhmit-Struktur als wasserunlösliches, anorganisches, poröses Oxid enthält. Pseudoböhmit ist ein Agglomerat von kolloidalen Teilchen von Aluminiumoxid/hydroxid der Formel Al₂O₃ • n H₂O (n = 1 bis 1.5).

In der Patentanmeldung EP 0'875'394 werden Aufzeichnungsmaterialien für den Tintenstrahldruck vorgeschlagen, in dem die Tintenaufnahmeschicht ein wasserunlösliches, anorganisches, poröses Aluminiumoxid/hydroxid enthält, das eines oder mehrere Elemente der Ordnungszahl 57 bis 71 des periodischen Systems der Elemente enthält.

In der Patentanmeldung WO 00-02'736 wird ein Aufzeichnungsmaterial für den Tintenstrahldruck beschrieben, in dem die Tintenaufnahmeschicht eine Mischung von Siliziumdioxid und Aluminiumoxid/hydroxid (Sol mit 23 % Al₂O₃) enthält.

In der Patentanmeldung EP 0'777'014 werden Pigmentschichten als Überzug für Papiere beschrieben, die eine Mischung eines groben anorganischen Pigments (Grösse 2 µm bis 4 µm) und eines feinen anorganischen Pigments enthalten, wobei der logarithmische Unterschied der mittleren Korngrössen der beiden Pigmente mindestens 0.5 beträgt. Verwendete Pigmente sind nicht-poröses Calciumcarbonat oder Kaolin.

Aufzeichnungsmaterialien, die solche porösen Oxide oder Oxid/hydroxide enthalten, absorbieren wässrige Tinten wesentlich rascher als Aufzeichnungsmaterialien, die keine solchen Substanzen enthalten. Die Aufnahmekapazität ist in vielen Fällen aber noch ungenügend. Im weiteren tendieren solche Aufzeichnungsmaterialien zu ungenügender Transparenz und zu Brüchigkeit.

### Zusammenfassung der Erfindung

Ein Ziel der Erfindung ist die Bereitstellung von Aufzeichnungsmaterialien für den Tintenstrahldruck, die neben einem hohen Tintenaufnahmevermögen verbunden mit einer raschen Tintenaufnahme eine hervorragende Bildqualität aufweisen.

Ein weiteres Ziel der Erfindung ist die Bereitstellung solcher Aufzeichnungsmaterialien für den Tintenstrahldruck, die mit den meisten heute auf dem Markt erhältlichen Tintenstrahldruckern eine hervorragende Bildqualität ergeben.

Ein weiteres Ziel der Erfindung ist die Bereitstellung von Aufzeichnungsmaterialien für den Tintenstrahldruck mit wenigstens einer Tintenaufnahmeschicht, die eine Mischung wasserunlöslicher, anorganischer Oxide der Elemente Aluminium oder Silizium oder Oxid/hydroxide des Elements Aluminium enthält, wobei mindestens eines dieser Oxide oder Oxid/hydroxide porös ist.

Ein weiteres Ziel der Erfindung ist, solche Tintenaufnahmeschichten derart herzustellen, dass die wasserunlöslichen, anorganischen Oxide oder Oxid/hydroxide als Festkörper eingesetzt werden können.

Gelöst wird diese Aufgabe durch ein Aufzeichnungsmaterial für den Tintenstrahldruck, das in wenigstens einer Tintenaufnahmeschicht neben einem oder mehreren Bindemitteln eine Mischung verschiedener wasserunlöslicher, anorganischer Oxide der Elemente Aluminium oder Silizium oder Oxid/hydroxide des Elements Aluminium oder Aluminiumsilikate mit unterschiedlichen chemischen und / oder morphologischen Eigenschaften enthält, wobei mindestens eines dieser Oxide, Oxid/hydroxide oder Silikate porös ist. Die Menge dieses porösen, wasserunlöslichen, anorganischen Oxids oder Oxid/hydroxids beträgt mindestens 8 %, vorzugsweise aber mindestens 40 % der Gesamtmenge aller vorhin genannten wasserunlöslichen, anorganischen Oxide, Oxid/hydroxide oder Silikate. Die verschiedenen wasserunlöslichen, anorganischen Oxide, Oxid/hydroxide oder Silikate sind von ähnlicher Grösse.

γ- oder δ-Aluminiumoxid, Aluminiumoxid/hydroxid, mit Elementen aus der Gruppe der Seltenen Erden des Periodischen Systems der Elemente dotiertes Aluminiumoxid/hydroxid oder Siliziumdioxid sind bevorzugte wasserunlösliche, anorganische Oxide oder Oxid/hydroxide. Diese Substanzen existieren in vielen Fällen in einer porösen und einer nicht-porösen Form.

Daneben enthalten die Tintenaufnahmeschichten ein oder mehrere Bindemittel.

Bevorzugte Bindemittel sind Gelatine, Polyvinylalkohol, Abkömmlinge des Polyvinylalkohols, Polyvinylpyrrolidon oder Mischungen davon in einer Menge von vorzugsweise 5 bis 50 Gewichtsprozent bezogen auf die Gesamtmenge der wasserunlöslichen, anorganischen Oxide, Oxid/hydroxide und Silikate.

Besonders bevorzugt sind filmbildende Bindemittel oder Bindemittel in Latexform. Die Tintenaufnahmeschichten können zusätzlich noch ein Vernetzungsmittel für das oder die Bindemittel enthalten, Netzmittel, Füllstoffe, natürliche oder künstliche Polymere sowie weitere dem Fachmann bekannte Verbindungen, die die bildmässigen und / oder physikalischen Eigenschaften des Bildes verbessern, wie beispielsweise UV-Absorber, optische Aufheller, Lichtstabilisatoren, Antioxidantien, Feuchthaltemittel, Distanzhalter usw.

Die Erfindung wird in der folgenden ausführlichen Beschreibung näher erläutert.

### Ausführliche Beschreibung der Erfindung

Wir haben nun gefunden, dass der Zusatz von Mischungen verschiedener wasserunlöslicher, anorganischer Oxide der Elemente Aluminium oder Silizium, von Oxid/hydroxiden des Elements Aluminium oder von Aluminiumsilikaten von vergleichbarer Grösse, jedoch mit unterschiedlichen chemischen und / oder morphologischen Eigenschaften, zu einer Tintenaufnahmeschicht die Aufnahmekapazität solcher Aufzeichnungsmaterialien für wässrige Tinten stark erhöht. Der teilweise Ersatz der porösen, anorganischen Oxide/hydroxide in den Tintenaufnahmeschichten von Aufzeichnungsmaterialien, wie sie in den Patentanmeldungen EP 0'298'424, EP 0'407'720, EP 0'622'244, EP 0'875'394 und JP 60-245'588 beschrieben wurden, durch nicht-poröse Oxide, Oxid/hydroxide oder Silikate führt zu einer Erhöhung der Tintenaufnahmekapazität und nicht zu einer Abnahme, wie zu erwarten wäre. Erfindungsgemässe Aufzeichnungsmaterialien zeigen auch eine verbesserte Transparenz und eine geringere Tendenz zur Rissbildung.

Der Zusatz von Mischungen verschiedener wasserunlöslicher, anorganischer Oxide der Elemente Aluminium oder Silizium, von Oxid/hydroxiden des Elements Aluminium oder von Aluminiumsilikaten von vergleichbarer Grösse und mit unterschiedlichen chemischen und / oder morphologischen Eigenschaften ergibt ausgezeichnete Tintenaufnahmeschichten für Aufzeichnungsmaterialien für den Tintenstrahldruck, wenn sie in dieselbe Schicht zusammen mit einem oder mehreren Bindemitteln eingebracht werden. Mindestens eines dieser Oxide, Oxid/hydroxide oder Silikate muss porös sein. Seine Menge beträgt mindestens 8 % der Gesamtmenge dieser wasserunlöslichen, anorganischen Oxide, Oxid/hydroxide oder Silikate in dieser Schicht.

Bevorzugt enthält diese Schicht diese porösen, wasserunlöslichen, anorganischen Oxide, Oxid/hydroxide oder Silikate in einer Menge von mindestens 40 % der Gesamtmenge aller wasserunlöslichen, anorganischen Oxide, Oxid/hydroxide oder Silikate dieser Schicht.

Die Porosität der wasserunlöslichen, anorganischen Oxide oder Oxid/hydroxide wurde mittels der BET-Isotherme bestimmt, wie es in G. M. Barrow, "Physical Chemistry", 2. Ausgabe, McGraw-Hill Book Company, 1966, Seiten 764- 765 beschrieben ist. Bei Tintenaufnahmeschichten für den Tintenstrahldruck hat sich herausgestellt, dass nur der Zusatz von porösen Substanzen, deren Porenvolumen ≥ 40 ml / 100 g ist, die Aufnahmegeschwindigkeit und die Aufnahmekapazität wässriger Tinten wesentlich erhöht. Solche Substanzen werden im weiteren als "porös" bezeichnet, während Substanzen mit einem Porenvolumen < 40 ml / 100 g im weiteren als "nicht-porös" zu betrachten sind.

Die Grösse der Primärteilchen dieser wasserunlöslichen, anorganischen Oxide, Oxid/hydroxide oder Silikate, wie sie durch Transmissionselektronenmikroskopie bestimmt werden kann, liegt im Nanometerbereich. Die Grösse unregelmässig geformter Primärteilchen wird als Durchmesser einer Kugel angegeben, das das gleiche Volumen wie das unregelmässig geformte Primärteilchen hat.

Diese Primärteilchen haben einen äquivalenten Kugeldurchmesser, der für die Mischungskomponente mit dem grössten Volumen kleiner als 20 nm ist. Die Mischungskomponente mit dem kleinsten Volumen hat einen äquivalenten Kugeldurchmesser, der grösser als 1/20 des äquivalenten Kugeldurchmessers der Mischungskomponente mit dem grössten Volumen ist.

Bevorzugt sind Mischungen, bei denen die Primärteilchen einen äquivalenten Kugeldurchmesser besitzen, der für die Mischungskomponente mit dem grössten Volumen kleiner als 15 nm ist und die Mischungskomponente mit dem kleinsten Volumen einen äquivalenten Kugeldurchmesser hat, der grösser als 1/10 des äquivalenten Kugeldurchmessers der Mischungskomponente mit dem grössten Volumen ist.

Bevorzugt als wasserunlösliche, anorganische Oxide sind γ- oder δ-Aluminiumoxid oder Siliziumdioxid, als wasserunlösliche, anorganische Oxid/hydroxide Aluminiumoxid/hydroxid oder mit Elementen aus der Gruppe der Seltenen Erden des Periodischen Systems der Elemente dotiertes Aluminiumoxid/hydroxid. Das Siliziumdioxid kann positiv oder negativ geladen sein. Als wasserunlösliches, anorganisches Aluminiumsilikat kann Imogolit, ein natürlich vorkommendes hydratisiertes faserförmiges Aluminiumsilikatpolymer der Zusammensetzung (OH)₃Al₂O₃SiOH, verwendet werden. Imogolit-Fasern können auch synthetisch hergestellt werden.

Bevorzugt als wasserunlösliche, anorganische, poröse Oxide mit einem Porenvolumen > 40 ml / 100 g sind γ- oder δ-Aluminiumoxid oder Siliziumdioxid, als wasserunlösliche, anorganische poröse Oxid/hydroxide mit einem Porenvolumen ≥ 40 ml / 100 g Aiuminiumoxid/hydroxid oder mit Elementen aus der Gruppe der Seltenen Erden des Periodischen Systems der Elemente dotiertes Aluminiumoxid/hydroxid.

Vorzugsweise enthält das mit Elementen aus der Gruppe der Seltenen Erden des Periodischen Systems der Elemente dotierte Aluminiumoxid/hydroxid die Elemente der Ordnungszahl 57 bis 71 in einer Menge zwischen 0.04 und 4.2 Molprozent bezogen auf Al₂O₃.

Die folgenden Mischungen sind bevorzugt:
- Aluminiumoxid/hydroxid (porös) mit γ- oder δ-Aluminiumoxid (porös)
- Aiuminiumoxid/hydroxid (porös) mit Siliziumdioxid (porös)
- γ- oder δ-Aluminiumoxid (porös) mit Siliziumdioxid (porös)
- Aluminiumoxid/hydroxid (porös) mit Siliziumdioxid (nicht-porös)
- γ- oder δ-Aluminiumoxid (porös) mit Aluminiumoxid/hydroxid (nicht-porös)
- Aiuminiumoxid/hydroxid (porös) mit Aluminiumoxid/hydroxid (nicht-porös)
- Aiuminiumoxid/hydroxid (porös) mit Imogolit (nicht-porös)
- γ- oder δ-Aluminiumoxid (porös) mit Imogolit (nicht-porös)
- Siliziumdioxid (porös) mit Imogolit (nicht-porös)

Besonders bevorzugt in diesen Mischungen ist mit Elementen aus der Gruppe der Seltenen Erden des Periodischen Systems der Elemente dotiertes poröses Aluminiumoxid/hydroxid oder poröses positiv geladenes Siliziumdioxid.

Die Primärteilchen der wasserunlöslichen, anorganischen Oxide, Oxid/hydroxide oder Silikate können die Form von Plättchen, von Stäbchen, Kügelchen oder Fasern besitzen. Als Mischungskomponenten werden bevorzugt Substanzen verwendet, die eine unterschiedliche Form besitzen. Plättchen können durch ihren Formfaktor näher charakterisiert werden, der das Verhältnis zwischen der Plättchendicke und dem Plättchendurchmesser angibt.

Besonders bevorzugt sind die folgenden Kombinationen:
- Kügelchen und Plättchen
- Kügelchen und Stäbchen
- Plättchen und Fasern
- Kügelchen und Fasern

Beispiel für kugelförmige Teilchen ist Siliziumdioxid, entweder positiv oder negativ geladen.

Beispiele für stäbchenförmige Teilchen sind Aluminiumoxid/hydroxid oder mit Elementen aus der Gruppe der Seltenen Erden des Periodischen Systems der Elemente dotiertes Aluminiumoxid/hydroxid.

Beispiele für plättchenförmige Teilchen sind Aluminiumoxid/hydroxid mit einem Formfaktor von 4 bis 8 oder γ- oder δ-Aluminiumoxid mit einem Formfaktor von 1.5 bis 3.

Beispiel für faserförmige Teilchen ist Imogolit.

Die Bindemittel sind im allgemeinen wasserlösliche Polymere. Besonders bevorzugt sind filmbildende Polymere oder Polymere in Latexform.

Die wasserlöslichen Polymere umfassen z. B. natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolisierte Gelatinen, wie auch substituierte Gelatinen, beispielsweise phthalierte, acetylierte oder carbamoylierte Gelatine, oder mit Trimellitsäureanhydrid umgesetzte Gelatine.

Ein bevorzugtes natürliches Bindemittel ist Gelatine.

Synthetische Bindemittel können ebenfalls verwendet werden und umfassen beispielsweise Polyvinylalkohol, vollständig oder teilweise verseifte Verbindungen von Copolymeren aus Vinylacetat und anderen Monomeren; Homopolymere oder Copolymere von ungesättigten Carbonsäuren wie (Meth)acrylsäure, Maleinsäure, Crotonsäure usw.; Homopolymere oder Copolymere aus sulfonierten Vinylmonomeren wie z. B. Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; wasserlösliche Nylonpolymere; Polyvinylpyrrolidon; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolisierte Polyvinylacetate; Polyamide; Polyvinylpyridine; Polyacrylsäure; Copolymere mit Maleinsäureanhydrid; Polyalkylenoxide; Copolymere mit Methacrylamid und Copolymere mit Maleinsäure eingesetzt werden. Alle diese Polymere können auch als Mischungen verwendet werden.

Bevorzugte synthetische Bindemittel sind Polyvinylalkohol, Derivate des Polyvinylalkohols, Polyvinylpyrrolidon oder Mischungen dieser Verbindungen.

Diese Polymere können mit wasserunlöslichen natürlichen oder synthetischen hochmolekularen Verbindungen gemischt werden, insbesondere mit Acryllatices oder Styrolacryllatices.

Obwohl wasserunlösliche Bindemittel nicht explizit beansprucht werden, so sollen wasserunlösliche Polymere trotzdem als Systembestandteil angesehen werden.

Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie z. B. der Flüssigkeitsaufnahme, oder der Widerstandsfähigkeit gegen Schichtverletzungen.

Die Vemetzer und Härter werden auf Grund der zu vernetzenden wasserlöslichen Polymere ausgesucht.

Organische Vemetzer und Härter umfassen beispielsweise Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)methylether), reaktive Halogenverbindungen (wie 2,4-Dichloro-6-Hydroxy-s-Triazin); Epoxide; Aziridine; Carbamoylpyridinverbindungen, Melaminharze oder Mischungen zweier oder mehrerer dieser erwähnten vernetzenden Verbindungen.

Anorganische Vernetzer und Härter umfassen beispielsweise Chromalaun, Aluminiumalaun, Borsäure oder Borate.

Die Schichten können auch reaktive Substanzen enthalten, die unter Einwirkung von UV- oder IR-Licht, Elektronenstrahlen, Röntgenstrahlen oder Wärme die Schichten vernetzen.

Die erfindungsgemässen Aufzeichnungsmaterialien für den Tintenstrahldruck können neben der Tintenaufnahmeschicht gegebenenfalls weitere Schichten und

Hilfsschichten enthalten, entweder oberhalb oder unterhalb der Tintenaufnahmeschicht.

Die Schichten können durch den Zusatz von Füllstoffen modifiziert werden. Mögliche Füllstoffe sind z. B. Kaolin, Ca- oder Ba-Carbonate, Siliziumdioxid, Titandioxid, Bentonite, Zeolite, Aluminiumsilikat, Calciumsilikat oder kolloidales Siliziumdioxid. Auch inerte organische Partikeln wie z. B. Kunststoffkügelchen können verwendet werden. Diese Kügelchen können aus Polyacrylaten, Polyacrylamiden, Polystyrol oder verschiedenen Copolymeren aus Acrylaten und Styrol bestehen. Die Füllstoffe werden auf Grund des beabsichtigten Gebrauchs der hergestellten Bilder ausgewählt. Einige dieser Füllstoffe können in transparenten Materialien nicht verwendet werden. Sie können aber positive Wirkungen in Aufsichtsmaterialien besitzen. Sehr oft erreicht man mit dem Einsatz solcher Füllstoffe eine gewünschte matte Oberfläche.

Die Aufzeichnungsmaterialien können neben den Mischungen der porösen anorganischen Verbindungen in der Tintenaufnahmeschicht zusätzlich lösliche Metallsalze enthalten, beispielsweise Erdalkalisalze oder Salze der seltenen Erden.

In den erfindungsgemässen Aufzeichnungsmaterialien ist mindestens eine Tintenaufnahmeschicht auf einen Träger aufgebracht. Eine grosse Vielfalt an Trägern ist bekannt und wird auch eingesetzt. So können alle Träger, die bei der Herstellung von photographischen Materialien verwendet werden, eingesetzt werden. Verwendet werden z. B. transparente Träger aus Celluloseestem wie Cellulosetriacetat, Celluloseacetat, Cellulosepropionat oder Celluloseacetat/butyrat, Polyester wie Polyethylenterephthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat, wegen ihrer ausgezeichneten Dimensionsstabilität. Bei den in der photographischen Industrie eingesetzten opaken Trägern können z. B. Barytpapier, mit Polyolefinen beschichtete Papiere oder weissopake Polyester wie z. B. Melinex® der Firma DuPont eingesetzt werden. Besonders bevorzugt sind polyolefinbeschichtete Papiere oder weissopaker Polyester.

Es ist vorteilhaft, diese Träger, insbesondere Polyester, vor dem Beguss mit einer Substrierschicht zu versehen, um die Haftung der Tintenaufnahmeschichten oder anderer Schichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure.

Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden, wie auch Metallfolien, beispielsweise aus Aluminium.

Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Neben ihrer Wirkung während des Giessvorgangs können diese Verbindungen auch einen Einfluss auf die Bildqualität haben und können deshalb dementsprechend ausgewählt werden. Obwohl solche oberflächenaktiven Verbindungen in der Erfindung nicht beansprucht werden, bilden sie trotzdem einen wesentlichen Bestandteil der Erfindung.

Zusätzlich zu den schon erwähnten Bestandteilen können die erfindungsgemässen Aufzeichnungsmaterialien zusätzliche Verbindungen enthalten, um seine Eigenschaften weiter zu verbessern, so beispielsweise optische Aufheller zur Verbesserung des Weissgrades, wie beispielsweise Stilbene, Cumarine, Triazine, Oxazole oder weitere dem Fachmann bekannte Verbindungen.

Zur Verbesserung der Lichtechtheit können UV-Absorber, wie beispielsweise Benztriazole, Benzophenone, Thiazolidone, Oxazole, Thiazole oder weitere dem Fachmann bekannte Verbindungen verwendet werden. Die Menge des UV-Absorbers beträgt 200 - 2000 mg/m², vorzugsweise 400 - 1000 mg/m². Der UV-Absorber kann in jede Schicht des erfindungsgemässen Aufzeichnungsmaterials eingebracht werden, besonders vorteilhaft ist aber, wenn er in die oberste Schicht eingebracht wird.

Es ist weiter bekannt, dass die im Tintenstrahldruck hergestellten Bilder durch den Zusatz von Stabilisatoren und Antioxidantien geschützt werden können. Beispiele solcher Verbindungen sind sterisch gehinderte Phenole, sterisch gehinderte Amine, Chromanole, reduzierende Verbindungen wie Ascorbinsäure usw. Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen beispielsweise in einem mit Wasser mischbaren organischen Lösungsmittel wie z. B. niedere Alkohole, Glykole, Ketone, Ester oder Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.

Normalerweise haben die erfindungsgemässen Tintenaufnahmeschichten eine Trockenschichtdicke von 0.5 µm bis 100 µm, insbesondere von 5 µm bis 50 µm.

Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können. Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylpyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane, Acrylate usw.

Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Nitrate, Chloride, Phosphate und die wasserlöslichen Salze wasserlöslicher organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, beinhalten praktisch alle bekannten Klassen dieser farbigen Verbindungen. Typische Beispiele verwendeter Farbstoffe oder Pigment sind in der Patentanmeldung EP 0'559'324 aufgeführt. Die erfindungsgemässen Aufzeichnungsmaterialien können mit fast allen dem Stand der Technik entsprechenden Tinten verwendet werden.

Zusätzlich können die Tinten weitere Zusätze wie oberflächenaktive Substanzen, optische Aufheller, UV-Absorber, Lichtstabilisatoren, Konservierungsmittel und polymere Verbindungen enthalten.

Die Beschreibung der Tinten dient nur als Illustration und ist in Bezug auf die Erfindung in keiner Weise einschränkend.

Die folgenden Verfahren wurden zur Prüfung und zum Vergleich der hier beschriebenen Aufzeichnungsmaterialien verwendet.

### Bildhomogenität

Auf die erfindungsgemässen Aufzeichnungsmaterialien, wie sie in den folgenden Beispielen beschrieben werden, wurden mit einem Tintenstrahldrucker EPSON STYLUS™ COLOR 500 im Transparent-Modus mit Originaltinten elfstufige Farbkeile in den 7 Farben Blaugrün, Purpur, Gelb, Schwarz, Rot, Grün und Blau gedruckt, wobei die Tröpfchenzahl von Stufe 1 (100 %) zu Stufe 10 (10 %) linear abnimmt. Stufe 11 hat eine Tröpfchenzahl von 5 %. Auf einem Leuchttisch wurden anschliessend die inhomogenen Farbfelder gezählt. Grosse Zahlen bedeuten schlechte Bildhomogenität (grosse Anzahl inhomogener Felder). Bei perfekter Bildqualität wird die Zahl Null erhalten, da keines der gedruckten Felder inhomogen ist.

### Farbausbluten

Auf die erfindungsgemässen Aufzeichnungsmaterialien wurden mit einem Tintenstrahldrucker EPSON STYLUS™ COLOR 500 im Transparent-Modus mit Originaltinten direkt aneinander angrenzende Farbfelder mit 100 % Tröpfchendichte gedruckt. Das Farbausbluten wurde anhand einer Notenskala von 1 (sehr starkes Farbausbluten) bis 5 (kein Farbausbluten) in den aneinandergrenzenden Farbfeldern Blau / Gelb, Grün / Purpur und Rot / Blaugrün beurteilt.

In den folgenden Beispielen wurden die in Tabelle 1 aufgeführten Substanzen verwendet, deren chemische und morphologische Eigenschaften kurz charakterisiert sind.

Die Porenvolumen wurden nach dem in G. M. Barrow, "Physical Chemistry", zweite Ausgabe, McGraw-Hill Book Company, 1966, Seiten 764 - 765 beschriebenen Verfahren bestimmt.

Die Grösse und die Form der Primärteilchen wurden mittels Transmissionselektronenmikroskopie bestimmt.

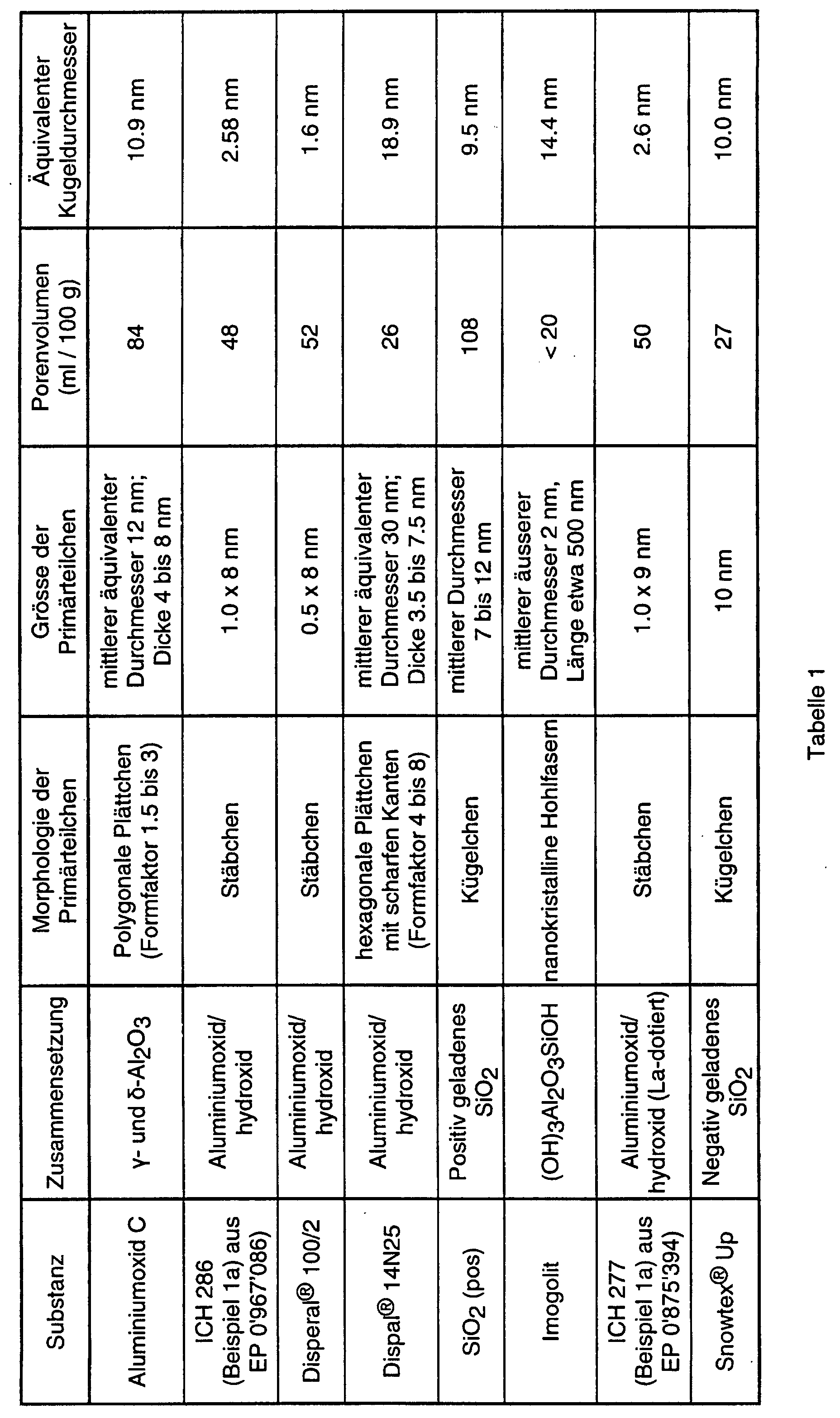

Als Bindemittel wurde Polyvinylalkohol mit einem Hydrolysegrad von 98 - 99 % und einem Molekulargewicht 85'000 bis 146'000 verwendet, der bei ALDRICH Chemie, Buchs, Schweiz erhältlich ist.

Die Güsse wurden hergestellt, indem 100 g/m² der im folgenden beschriebenen Giesslösung bei einer Temperatur von 40° C auf einen transparenten Polyesterträger gegossen wurden und anschliessend der begossene Träger 60 Minuten bei einer Temperatur von 35° C getrocknet wurde.

### Beispiele

### Beispiel 1

### a) Herstellung einer wässrigen Dispersion von Aluminiumoxid C mit einem Gehalt von 18 Gewichtsprozent Al₂O₃

37.27 g Aluminiumoxid C (erhältlich bei DEGUSSA AG, Frankfurt/Main, Deutschland) mit einem Gehalt von 96.6 % Al₂O₃ wurden unter Ultraschallbehandlung bei einer Temperatur von 25° C in 162.73 g wässriger Essigsäure (2 %) dispergiert.

### b) Herstellung von Aluminiumoxid/hydroxid durch Hydrolyse von Aluminiumisopropoxid (Substanz aus Beispiel 1a) von EP 0'967'086 (ICH 286))

In einem Reaktionsgefäss aus Glas wurden 360 g deionisiertes Wasser und 338 g Isopropanol vorgelegt. Bei einer Temperatur von 75° C wurden 153 g Aluminiumisopropoxid (erhältlich bei Fluka Chemie AG, Buchs, Schweiz) zugegeben und das Gemisch bei einer Temperatur zwischen 75° C und 78° C während 4 Stunden gerührt. Nach der Erhöhung der Temperatur auf 95° C wurden 1.5 g 2-Hydroxypropionsäure zugegeben. Anschliessend wurde auf eine Temperatur zwischen 75° C und 78° C abgekühlt und das Gemisch 48 Stunden unter Rühren bei dieser Temperatur gehalten. Zum Schluss wurde die erhaltene kolloidale Lösung im Vakuum eingedampft. Es wurden 43 g eines weissen Pulvers mit einem Gehalt von 75.2 % Al₂O₃ erhalten. Das Röntgendiffraktionsspektrum entsprach Pseudoböhmit der Formel AlOOH.

### c) Herstellung der Giesslösung

38.89 g der wässrigen Dispersion von Al₂O₃ aus Beispiel 1a) wurden zusammen mit 3.99 g ICH 286 und 16 g einer Lösung von Polyvinylalkohol (7.5 %) bei einer Temperatur von 40° C unter Ultraschallbehandlung dispergiert und das Endgewicht mit deionisiertem Wasser auf 100 g eingestellt.

Die Giesslösung enthält Aluminiumoxid C und ICH 286 im Gewichtsverhältnis 70 : 30, beide als Al₂O₃ berechnet.

### d) Guss

1 m² des begossenen Trägers enthält 10 g anorganische Oxide, berechnet als Al₂O₃, und 1.2 g Polyvinylalkohol.

### Vergleichsbeispiel 1 C1

An Stelle der Mischung von Aluminiumoxid C und ICH 286 wurden in der Giesslösung von Beispiel 1c) 55.56 g der wässrigen Dispersion von Al₂O₃ aus Beispiel 1a) verwendet. 1 m² des begossenen Trägers enthält 10 g anorganische Oxide, berechnet als Al₂O₃, und 1.2 g Polyvinylalkohol.

### Vergleichsbeispiel 1 C2

An Stelle der Mischung von Aluminiumoxid C und ICH 286 wurden in der Giesslösung von Beispiel 1c) 13.3 g ICH 286 verwendet. 1 m² des begossenen Trägers enthält 10 g anorganische Oxide, berechnet als Al₂O₃, und 1.2 g Polyvinylalkohol.

### Beispiele 2 - 5

In diesen Beispielen wurden die in Beispiel 1 verwendeten Substanzen Aluminiumoxid C und ICH 286 in den in Tabelle 2 angegebenen Mengenverhältnissen eingesetzt.

**Tabelle 2**

| Beispiel | Mengenverhältnis | |
|---|---|---|
| | Aluminiumoxid C | ICH 286 |
| 2 | 60 | 40 |
| 3 | 50 | 50 |
| 4 | 40 | 60 |
| 5 | 30 | 70 |

### Beispiel 6

### c) Herstellung der Giesslösung

13.3 g der wässrigen Dispersion von Al₂O₃ aus Beispiel 1a) wurden zusammen mit 5.6 g Disperal® 100/2 (erhältlich bei CONDEA GmbH, Hamburg, Deutschland) in 0.96 g Essigsäure und 9.6 g einer Lösung von Polyvinylalkohol (10 %) bei einer Temperatur von 40° C unter Ultraschallbehandlung dispergiert und das Endgewicht mit deionisiertem Wasser auf 80 g eingestellt. Die Giesslösung enthält Aluminiumoxid C und Disperal® 100/2 im Gewichtsverhältnis 30 : 70, beide als Al₂O₃ berechnet.

### d) Guss

1 m² des begossenen Trägers enthält 8.5 g anorganische Oxide, berechnet als Al₂O₃, und 1.2 g Polyvinylalkohol.

### Vergleichsbeispiel 6 C1

### c) Herstellung der Giesslösung

8.0 g Disperal® 100/2 wurden bei einer Temperatur von 20° C unter Ultraschallbehandlung in 0.96 g Essigsäure und 56 g deionisiertem Wasser dispergiert und danach wurden 9.6 g einer Lösung von Polyvinylalkohol (10 %) zugegeben, das Endgewicht mit deionisiertem Wasser auf 80 g eingestellt und die Lösung nochmals 3 Minuten mit Ultraschall behandelt.

### d) Guss

1 m² des begossenen Trägers enthält 8.5 g anorganisches Oxid, berechnet als Al₂O₃, und 1.2 g Polyvinylalkohol.

### Vergleichsbeispiel 6 C2

### c) Herstellung der Giesslösung

37.8 g der wässrigen Dispersion von Al₂O₃ aus Beispiel 1a) wurden zusammen mit 9.6 g einer Lösung von Polyvinylalkohol (10 %) unter Ultraschallbehandlung dispergiert und das Endgewicht mit deionisiertem Wasser auf 80 g eingestellt.

### d) Guss

1 m² des begossenen Trägers enthält 8.5 g anorganisches Oxid, berechnet als Al₂O₃, und 1.2 g Polyvinylalkohol.

### Beispiel 7

### c) Herstellung der Giesslösung

10.0 g Dispal® 14R25 (24.2 %ige wässrige Dispersion von Aluminiumoxid/hydroxid, erhältlich bei Condea Vista, Houston, USA) wurden zusammen mit 5.6 g Disperal® 100/2 bei einer Temperatur von 20° C in 0.96 g Essigsäure und 45 g deionisiertem Wasser unter Ultraschallbehandlung dispergiert. Nach Zugabe von 9.6 g einer Lösung von Polyvinylalkohol (10 %) und dem Einstellen des Endgewichts auf 80 g mit deionisiertem Wasser wurde die Lösung nochmals 3 Minuten mit Ultraschall behandelt.

Die Giesslösung enthält Dispal® 14R25 und Disperal® 100/2 im Gewichtsverhältnis 36 : 64, beide als Al₂O₃ berechnet.

### d) Guss

1 m² des begossenen Trägers enthält 10 g anorganische Oxide, berechnet als Al₂O₃, und 1.2 g Polyvinylalkohol.

### Vergleichsbeispiel 7 C1

### c) Herstellung der Giesslösung

33.3 g Dispal® 14R25 wurden bei einer Temperatur von 20° C in 0.96 g Essigsäure und 45 g deionisiertem Wasser unter Ultraschallbehandlung dispergiert. Nach Zugabe von 9.6 g einer Lösung von Polyvinylalkohol (10 %) und dem Einstellen des Endgewichts auf 80 g mit deionisiertem Wasser wurde die Lösung nochmals 3 Minuten mit Ultraschall behandelt.

### d) Guss

1 m² des begossenen Trägers enthält 10 g anorganisches Oxid, berechnet als Al₂O₃, und 1.2 g Polyvinylalkohol.

### Beispiel 8

### a) Herstellung einer wässrigen Dispersion von positiv geladenem SiO₂ (12 Gewichtsprozent SiO₂ (pos))

Diese Dispersion wurde gemäss der Vorschrift des Patents US 3'007'878 hergestellt:
1.97 g Aluminiumchlorhydrat der Formel Al₂(OH)₅Cl • 2.5 H₂O (Locron, erhältlich bei Clariant AG, Muttenz, Schweiz) wurde bei einer Temperatur von 20° C unter Rühren in 85 g deionisiertem Wasser gelöst. Anschliessend wurde die Lösung auf eine Temperatur von 40° C aufgeheizt, 12 g Aerosil 200 (SiO₂ mit einem isoelektrischen Punkt bei pH 2.0, erhältlich bei DEGUSSA AG, Frankfurt/Main, Deutschland) wurden zugegeben, das Gemisch unter Ultraschallbehandlung dispergiert und zum Schluss filtriert. Die entstandene Lösung enthält 12 Gewichtsprozent an positiv geladenem SiO₂ mit einem isoelektrischen Punkt bei pH 9.1 (Bestimmung durch akustophoretische Messung).

### c) Herstellung der Giesslösung

14.41 g der wässrigen Dispersion von positiv geladenem SiO₂ aus Beispiel 8a) wurden zusammen mit 9.61 g der wässrigen Dispersion von Al₂O₃ aus Beispiel 1a) und 7.14 g Dispal® 14R25 (24 %ige wässrige Dispersion) unter Rühren bei einer Temperatur von 20° C dispergiert. Nach Aufheizen auf eine Temperatur von 40° C wurden 12.1 g ICH 286 und 20.8 g einer Lösung von Polyvinylalkohol (7.5 %) zugegeben und die Lösung nach Einstellung des Endgewichts mit deionisiertem Wasser auf 100 g unter Ultraschallbehandlung dispergiert.

Die Giesslösung enthält die Substanzen Aluminiumoxid C , Dispal® 4R25, ICH 286 und positiv geladenes Siliziumdioxid im Gewichtsverhältnis 10 : 10 : 70 : 10.

### d) Guss

1 m² des begossenen Trägers enthält 17.3 g anorganische Substanzen und 1.56 g Polyvinylalkohol.

### Vergleichsbeispiel 8 C1

### c) Herstellung der Giesslösung

17.3 g ICH 286 wurden bei 40° C in 6.8 g Essigsäure und 40 g deionisiertem Wasser unter Ultraschallbehandlung dispergiert. Anschliessend wurden 20.8 g einer Lösung von Polyvinylalkohol (7.5 %) zugegeben und das Endgewichts mit deionisiertem Wasser auf 100 g eingestellt.

### d) Guss

1 m² des begossenen Trägers enthält 17.3 g anorganische Substanzen und 1.56 g Polyvinylalkohol.

### Beispiele 9 - 12

In den Giesslösungen wurden die in Beispiel 8 verwendeten Substanzen Aluminiumoxid C , Dispal® 14R25, ICH 286 und positiv geladenes Siliziumdioxid in den in Tabelle 3 angegebenen Verhältnissen verwendet.

**Tabelle 3**

| Beispiel | Mengenverhältnis | | | |
|---|---|---|---|---|
| | Aluminiumoxid C | Dispal® | ICH 286 | SiO₂ (pos) |
| 9 | | | 80 | 20 |
| 10 | | | 90 | 10 |
| 11 | 10 | | 80 | 10 |
| 12 | | 10 | 80 | 10 |

### Beispiel 13

### a) Herstellung einer kolloidalen wässrigen Dispersion von Imogolit (0.6 Gewichtsprozent)

Diese Dispersion wurde gemäss der Vorschrift im "Journal of Colloid and Interface Science" 216, 429 (1999) hergestellt.

### c) Herstellung der Giesslösung

50 g der wässrigen Dispersion von Imogolit aus Beispiel 13a) wurden unter Rühren bei 20° C in 1.2 g Essigsäure und 2.8 g deionisiertem Wasser dispergiert. Nach Aufheizen auf 40° C wurden 17.29 g ICH 286 und 20.8 g einer Lösung von Polyvinylalkohol (7.5 %) zugegeben und die Lösung nach Einstellung des Endgewichts mit deionisiertem Wasser auf 100 g unter Ultraschallbehandlung dispergiert.

Die Giesslösung enthält ICH 286 und Imogolit im Gewichtsverhältnis 97.7 : 2.3.

### d) Guss

1 m² des begossenen Trägers enthält 17.3 g anorganische Substanzen und 1.56 g Polyvinylalkohol.

### Beispiel 14

### c) Herstellung der Giesslösung

50 g der wässrigen Dispersion von Imogolit aus Beispiel 13a) wurden unter Rühren bei 20° C in 7.87 g Essigsäure (17.65 %) und 0.9 g deionisiertem Wasser dispergiert. Nach Aufheizen auf 40° C wurden 12.94 g Aluminiumoxid C und 20.8 g einer Lösung von Polyvinylalkohol (7.5 %) zugegeben und die Lösung nach Einstellung des Endgewichts mit deionisiertem Wasser auf 100 g unter Ultraschallbehandlung dispergiert.

Die Giesslösung enthält Aluminiumoxid C und Imogolit im Gewichtsverhältnis 97.7 : 2.3.

### d) Guss

1 m² des begossenen Trägers enthält 13.24 g anorganische Substanzen und 1.50 g Polyvinylalkohol.

### Vergleichsbeispiel 14 C1

### c) Herstellung der Giesslösung

12.94 g Aluminiumoxid C wurden bei einer Temperatur von 40° C in 7.87 g Essigsäure (17.65 %) und 50.9 g deionisiertem Wasser unter Ultraschallbehandlung dispergiert. Anschliessend wurden 20.0 g einer Lösung von Polyvinylalkohol (7.5 %) zugegeben, das Endgewicht mit deionisiertem Wasser auf 100 g eingestellt und die Lösung nochmals 3 Minuten mit Ultraschall behandelt.

### d) Herstellung des Gusses

1 m² des begossenen Trägers enthält 12.94 g anorganische Substanzen und 1.50 g Polyvinylalkohol.

### Beispiel 15

### b) Herstellung von mit Lanthan dotiertem Aluminiumoxid/hydroxid (2.2 Molprozent bezogen auf Al₂O₃) (Substanz aus Beispiel 1a) von EP 0'875'394 (ICH 277))

50g des Aluminiumoxid/hydroxids Disperal® 100/2 wurden unter guter mechanischer Rührung bei einer Temperatur von 20° C in 948 g bidestilliertem Wasser während 15 Minuten dispergiert. Danach wurde die Temperatur auf 90° C erhöht und anschliessend wurde 15 Minuten bei dieser Temperatur weitergerührt. Dann wurden 2.04 g LaCl₃ (erhältlich bei Fluka Chemie AG, Buchs, Schweiz) als Festsubstanz zugegeben und es wurde während 120 Minuten weitergerührt. Der Festkörper wurde abfiltriert, dreimal mit bidestilliertem Wasser gewaschen und bei 110° C getrocknet.

### c) Herstellung der Giesslösung

44.41 g der wässrigen Dispersion von Al₂O₃ aus Beispiel 1a) wurden zusammen mit 2.66 g ICH 277 und 16 g einer Lösung von Polyvinylalkohol (7.5 %) bei einer Temperatur von 40° C unter Ultraschallbehandlung dispergiert und das Endgewicht mit deionisiertem Wasser auf 100 g eingestellt.

Die Giesslösung enthält Aluminiumoxid C und ICH 277 (mit Lanthan dotiertes Aiuminiumoxid/hydroxid) im Gewichtsverhältnis 80 : 20, beide als Al₂O₃ berechnet.

### d) Guss

1 m² des begossenen Trägers enthält 10 g anorganische Oxide, berechnet als Al₂O₃, und 1.2 g Polyvinylalkohol.

### Vergleichsbeispiel 15 C1

An Stelle der Mischung von 17.3 g ICH 286 wurden in der Giesslösung von Beispiel 8 C1 17.3 g ICH 277 (mit Lanthan dotiertes Aiuminiumoxid/hydroxid) verwendet. 1 m² des begossenen Trägers enthält 10 g anorganische Oxide, berechnet als Al₂O₃, und 1.2 g Polyvinylalkohol.

### Beispiel 16

### a) Herstellung einer wässrigen Dispersion von positiv geladenem SiO₂ (24 Gewichtsprozent SiO₂ (pos))

24 g Aerosil 200 wurden bei einer Temperatur von 20° C unter Rühren in 72 g wässriger Essigsäure (2.78 %) gelöst. Danach wurden 3.94 g Aluminiumchlorhydrat der Formel Al₂(OH)₅Cl • 2.5 H₂O zugegeben und das Gesamtgewicht auf 100 g eingestellt. Die entstandene Lösung enthält 24 Gewichtsprozent an positiv geladenem SiO₂.

### c) Herstellung der Giesslösung

45.83 g der wässrigen Dispersion von Imogolit aus Beispiel 13a) wurden unter Rühren mit 27.08 g der wässrigen Dispersion von positiv geladenem SiO₂ aus Beispiel 16a) bei einer Temperatur von 40° C gemischt. Anschliessend wurden 23.4 g einer Lösung von Polyvinylalkohol (7.5 %) zugegeben und die Lösung nach Einstellung des Endgewichts mit deionisiertem Wasser auf 100 g unter Ultraschallbehandlung dispergiert.

Die Giesslösung enthält positiv geladenes SiO₂ und Imogolit im Gewichtsverhältnis 96 : 4.

### d) Guss

1 m² des begossenen Trägers enthält zusammen 6.5 g positiv geladenes SiO₂ und Imogolit sowie 1.75 g Polyvinylalkohol.

### Vergleichsbeispiel 16 C1

### c) Herstellung der Giesslösung

27.08 g der wässrigen Dispersion von positiv geladenem SiO₂ aus Beispiel 16a) wurden unter Rühren bei einer Temperatur von 40° C mit 23.4 g einer Lösung von Polyvinylalkohol (7.5 %) gemischt. Die Lösung wurde nach Einstellung des Endgewichts mit deionisiertem Wasser auf 100 g mit Ultraschall behandelt.

### d) Guss

1 m² des begossenen Trägers enthält 6.5 g positiv geladenes SiO₂ und 1.75 g Polyvinylalkohol.

### Beispiel 17

### c) Herstellung der Giesslösung

8.87 g der wässrigen Dispersion von Al₂O₃ aus Beispiel 1a) wurden zusammen mit 26.45 g Dispal® 14R25 gemischt, 9.6 g einer Lösung von Polyvinylalkohol (10 %) bei einer Temperatur von 40° C wurden zugefügt und das Gemisch nach Einstellung des Endgewichts mit deionisiertem Wasser auf 80 g mit Ultraschall behandelt.

Die Giesslösung enthält Aluminiumoxid C und Dispal® 14R25 im Gewichtsverhältnis 30 : 70, beide als Al₂O₃ berechnet.

### d) Guss

1 m² des begossenen Trägers enthält 10 g anorganische Oxide, berechnet als Al₂O₃, und 1.2 g Polyvinylalkohol.

### Beispiel 18

### c) Herstellung der Giesslösung

14.41 g der wässrigen Dispersion von positiv geladenem SiO₂ aus Beispiel 8a) wurden zusammen mit 64.26 g Dispal® 14R25 unter Rühren bei einer Temperatur von 20° C gemischt. Anschliessend wurden 20.8 g einer Lösung von Polyvinylalkohol (7.5 %) zugegeben und die Lösung nach Einstellung des Endgewichts mit deionisiertem Wasser auf 100 g nochmals mit Ultraschall behandelt.

Die Giesslösung enthält die Substanzen Dispal® 14R25 und positiv geladenes Siliziumdioxid im Gewichtsverhältnis 90 : 10.

### d) Guss

1 m² des begossenen Trägers enthält 17.3 g anorganische Substanzen und 1.56 g Polyvinylalkohol.

### Vergleichsbeispiel 18 C1

### c) Herstellung der Giesslösung

71.5 g Dispal® 14R25 wurden bei einer Temperatur von 20° C in 2.14 g Essigsäure und 5.56 g deionisiertem Wasser unter Ultraschallbehandlung dispergiert. Nach Zugabe von 20.8 g einer Lösung von Polyvinylalkohol (7.5 %) und dem Einstellen des Endgewichts auf 100 g mit deionisiertem Wasser wurde die Lösung nochmals 3 Minuten mit Ultraschall behandelt.

### d) Guss

1 m² des begossenen Trägers enthält 17.3 g anorganisches Oxid und 1.56 g Polyvinylalkohol.

### Beispiel 19

### c) Herstellung der Giesslösung

48.75 g der wässrigen Dispersion von positiv geladenem SiO₂ aus Beispiel 8a) wurden zusammen mit 2.69 g Dispal® 14R25 und 11.16 g deionisiertem Wasser unter Rühren bei einer Temperatur von 20° C gemischt. Anschliessend wurde das Gemisch auf eine Temperatur von 40° C erhitzt, 23.4 g einer Lösung von Polyvinylalkohol (7.5 %) zugegeben und die Lösung nach Einstellung des Endgewichts mit deionisiertem Wasser auf 100 g nochmals mit Ultraschall behandelt.

Die Giesslösung enthält die Substanzen Dispal® 14R25 und positiv geladenes Siliziumdioxid im Gewichtsverhältnis 10 : 90.

### d) Guss

1 m² des begossenen Trägers enthält 6.5 g anorganische Substanzen und 1.75 g Polyvinylalkohol.

### Vergleichsbeispiel 19 C1

### c) Herstellung der Giesslösung

54.17 g der wässrigen Dispersion von positiv geladenem SiO₂ aus Beispiel 8a) wurden mit 19.43 g deionisiertem Wasser unter Rühren bei einer Temperatur von 20° C gemischt. Anschliessend wurde das Gemisch auf eine Temperatur von 40° C erhitzt, 23.4 g einer Lösung von Polyvinylalkohol (7.5%) zugegeben und die Lösung nach Einstellung des Endgewichts mit deionisiertem Wasser auf 100 g nochmals mit Ultraschall behandelt.

### d) Guss

1 m² des begossenen Trägers enthält 6.5 g anorganische Substanzen und 1.75 g Polyvinylalkohol.

### Beispiel 20

### c) Herstellung der Giesslösung

43.33 g der wässrigen Dispersion von positiv geladenem SiO₂ aus Beispiel 8a) wurden zusammen mit 7.23 g der wässrigen Dispersion von Al₂O₃ aus Beispiel 1a) und 11.16 g deionisiertem Wasser unter Rühren bei einer Temperatur von 20° C gemischt. Anschliessend wurde das Gemisch auf eine Temperatur von 40° C erhitzt, 23.4 g einer Lösung von Polyvinylalkohol (7.5%) zugegeben und die Lösung nach Einstellung des Endgewichts mit deionisiertem Wasser auf 100 g mit Ultraschall behandelt.

Die Giesslösung enthält die Substanzen Aluminiumoxid C und positiv geladenes Siliziumdioxid im Gewichtsverhältnis 20 : 80.

### d) Guss

1 m² des begossenen Trägers enthält 6.5 g anorganische Substanzen und 1.75 g Polyvinylalkohol.

### Vergleichsbeispiel 20 C1

### c) Herstellung der Giesslösung

54.17 g der wässrigen Dispersion von positiv geladenem SiO₂ aus Beispiel 8a) wurden bei einer Temperatur von 40° C mit 23.4 g einer Lösung von Polyvinylalkohol (7.5%) gemischt. Anschliessend wurde die Lösung nach Einstellung des Endgewichts mit deionisiertem Wasser auf 100 g mit Ultraschall behandelt.

### d) Guss

1 m² des begossenen Trägers enthält 6.5 g positiv geladenes Siliziumdioxid und 1.75 g Polyvinylalkohol.

### Beispiel 21

### c) Herstellung der Giesslösung

10.83 g der wässrigen Dispersion von positiv geladenem SiO₂ aus Beispiel 8a) wurden zusammen mit 28.92 g der wässrigen Dispersion von Al₂O₃ aus Beispiel 1a) und 11.16 g deionisiertem Wasser unter Rühren bei einer Temperatur von 20° C gemischt. Anschliessend wurde das Gemisch auf eine Temperatur von 40° C erhitzt, 23.4 g einer Lösung von Polyvinylalkohol (7.5%) zugegeben und die Lösung nach Einstellung des Endgewichts mit deionisiertem Wasser auf 100 g mit Ultraschall behandelt.

Die Giesslösung enthält die Substanzen Aluminiumoxid C und positiv geladenes Siliziumdioxid im Gewichtsverhältnis 80 : 20.

### d) Guss

1 m² des begossenen Trägers enthält 6.5 g anorganische Substanzen und 1.75 g Polyvinylalkohol.

### Vergleichsbeispiel 21 C1

### c) Herstellung der Giesslösung

36.15 g der wässrigen Dispersion von Al₂O₃ aus Beispiel 1a) und 11.16 g deionisiertes Wasser wurden unter Rühren bei einer Temperatur von 20° C gemischt. Anschliessend wurde das Gemisch auf eine Temperatur von 40° C erhitzt, 23.4 g einer Lösung von Polyvinylalkohol (7.5%) zugegeben und die Lösung nach Einstellung des Endgewichts mit deionisiertem Wasser auf 100 g mit Ultraschall behandelt.

### d) Guss

1 m² des begossenen Trägers enthält 6.5 g Aluminiumoxid C und 1.75 g Polyvinylalkohol.

### Beispiel 22

### c) Herstellung der Giesslösung

4.86 g einer wässrigen Dispersion von Snowtex® Up (20.3 %, erhältlich bei Nissan Chemical Industries Ltd., Tokio, Japan) wurden zusammen mit 18.05 g ICH 286, 1.2 g Essigsäure und 11.16 g deionisiertem Wasser unter Rühren bei einer Temperatur von 20° C gemischt. Anschliessend wurde das Gemisch auf eine Temperatur von 40° C erhitzt, 22.84 g einer Lösung von Polyvinylalkohol (7.5%) zugegeben und die Lösung nach Einstellung des Endgewichts mit deionisiertem Wasser auf 100 g mit Ultraschall behandelt.

Die Giesslösung enthält die Substanzen ICH 286 und Snowtex® Up (negativ geladenes Siliziumdioxid) im Gewichtsverhältnis 95 : 5.

### d) Guss

1 m² des begossenen Trägers enthält 19.5 g anorganische Substanzen und 1.71 g Polyvinylalkohol.

### Vergleichsbeispiel 22 C1

### c) Herstellung der Giesslösung

19 g ICH 286, 1.2 g Essigsäure und 40 g deionisiertes Wasser wurden unter Rühren bei einer Temperatur von 20° C gemischt. Anschliessend wurde das Gemisch auf eine Temperatur von 40° C erhitzt, 22.84 g einer Lösung von Polyvinylalkohol (7.5%) zugegeben und die Lösung nach Einstellung des Endgewichts mit deionisiertem Wasser auf 100 g mit Ultraschall behandelt.

### d) Guss

1 m² des begossenen Trägers enthält 19.5 g ICH 286 und 1.71 g Polyvinylalkohol.

### Vergleichsbeispiel 22 C2

### c) Herstellung der Giesslösung

49.26 g der wässrigen Dispersion von Snowtex® Up, 1.2 g Essigsäure und 20 g deionisiertes Wasser wurden unter Rühren bei einer Temperatur von 20° C gemischt. Anschliessend wurde das Gemisch auf eine Temperatur von 40° C erhitzt, 22.84 g einer Lösung von Polyvinylalkohol (7.5 %) zugegeben und die Lösung nach Einstellung des Endgewichts mit deionisiertem Wasser auf 100 g mit Ultraschall behandelt.

### d) Guss

1 m² des begossenen Trägers enthält 19.5 g Snowtex® Up und 1.71 g Polyvinylalkohol.

### Beispiel 23

### c) Herstellung der Giesslösung U

54.17 g der wässrigen Dispersion von positiv geladenem SiO₂ aus Beispiel 8a) wurden bei einer Temperatur von 40° C mit 33.8 g einer Lösung von Polyvinylalkohol (7.5%) gemischt. Anschliessend wurde die Lösung nach Einstellung des Endgewichts mit deionisiertem Wasser auf 100 g mit Ultraschall behandelt.

### d) Guss

100 g/m² der obigen Giesslösung wurden wie üblich auf einen durchsichtigen Polyesterträger gegossen. Darauf wurden 100 g/m² der Giesslösung aus Beispiel 8c) als Überguss aufgetragen.

1 m² des Untergusses enthält 6.5 g positiv geladenes Siliziumdioxid und 2.53 g Polyvinylalkohol.

1 m² des Übergusses enthält 17.3 g anorganische Substanzen und 1.56 g Polyvinylalkohol.

### Ergebnisse

### Beispiele 1 - 5

Die Ergebnisse zur Bildhomogenität und zum Farbausbluten der Mischungen von Aluminiumoxid C und ICH 286 (Substanz aus Beispiel 1a) von EP 0'967'086) sind in Tabelle 5 zusammengestellt.

**Tabelle 5**

| Beispiel Nr. | System | Bildhomogenität | Farbausbluten |
|---|---|---|---|
| 1 | 70 % Aluminiumoxid C 30 % ICH 286 | 8 | 4 |
| 2 | 60 % Aluminiumoxid C 40 % ICH 286 | 8 | 5 |
| 3 | 50 % Aluminiumoxid C 50 % ICH 286 | 7 | 5 |
| 4 | 40 % Aluminiumoxid C 60 % ICH 286 | 0 | 5 |
| 5 | 30 % Aluminiumoxid C 70 % ICH 286 | 7 | 5 |
| 1 C1 | 100 % Aluminiumoxid C | 4 | 5 |
| 1 C2 | 100 % ICH 286 | 9 | 5 |

Den Ergebnissen aus Tabelle 5 ist sofort zu entnehmen, dass die optimale Mischung von Aluminiumoxid C und ICH 286 (Beispiel 4) eine viel bessere Bildhomogenität zeigt als die beiden Vergleichsbeispiele 1 C1 und 1 C2, die jeweils nur eine der beiden Komponenten enthalten.

Die Schichten der Beispiele 1 - 5 sind wesentlich transparenter als die Schicht von Vergleichsbeispiel 1 C1.

### Beispiel 6

Die Ergebnisse zur Bildhomogenität und zum Farbausbluten der Mischung von Aluminiumoxid C und Disperal® 100/2 sind in Tabelle 6 zusammengestellt.

**Tabelle 6**

| Beispiel Nr. | System | Bildhomogenität | Farbausbluten |
|---|---|---|---|
| 6 | 30 % Aluminiumoxid C 70% Disperal® 100/2 | 11 | 4 |
| 6 C1 | 100% Disperal® 100/2 | 17 | 4 |
| 6 C2 | 100 % Aluminiumoxid C | 14 | 2 |

Den Ergebnissen aus Tabelle 6 ist sofort zu entnehmen, dass die Mischung von Aluminiumoxid C und Disperal® 100/2 (Beispiel 6) eine bessere Bildhomogenität zeigt als die beiden Vergleichsbeispiele 6 C1 und 6 C2, die jeweils nur eine der beiden Komponenten enthalten. Insbesondere sind die Bildhomogenität und das Farbausbluten mit der Mischung von Aluminiumoxid C und Disperal® 100/2 (Beispiel 6) viel besser als mit Aluminiumoxid C allein (Vergleichsbeispiel 6 C2).

Die Schicht von Beispiel 6 ist wesentlich transparenter als die Schicht von Vergleichsbeispiel 6 C2.

### Beispiel 7

Die Ergebnisse zur Bildhomogenität und zum Farbausbluten der Mischung von Disperal® 100/2 und Dispal® 14R25 sind in Tabelle 7 zusammengestellt.

**Tabelle 7**

| Beispiel Nr. | System | Bildhomogenität | Farbausbluten |
|---|---|---|---|
| 7 | 64 % Disperal® 100/2 36 % Dispal® 14R25 | 12 | 4 |
| 7 C1 | 100 % Disperal® 100/2 | 24 | 2 |
| 7 C2 | 100 % Dispal® 14R25 | 50 | 1 |

Den Ergebnissen aus Tabelle 7 ist sofort zu entnehmen, dass die Mischung von Dispal® 14R25 und Disperal® 100/2 (Beispiel 7) eine viel bessere Bildhomogenität und ein wesentlich geringeres Farbausbluten zeigt als die beiden Vergleichsbeispiele 7 C1 und 7 C2, die jeweils nur eine der beiden Komponenten enthalten.

### Beispiele 8 - 12

Die Ergebnisse zur Bildhomogenität und zum Farbausbluten der Mischungen von Aluminiumoxid C, ICH 286 (Substanz aus Beispiel 1a) von EP 0'967'086), Dispal® 14R25 und positiv geladenem Siliziumdioxid SiO₂ sind in Tabelle 8 zusammengestellt.

**Tabelle 8**

| Beispiel Nr. | System | Bildhomogenität | Farbausbluten |
|---|---|---|---|
| 8 | 70 % ICH 286 10 % Aluminiumoxid C 10 % Dispal® 14R25 10 % SiO₂ (pos) | 4 | 5 |
| 9 | 80 % ICH 286 20 % SiO₂ (pos) | 5 | 5 |
| 10 | 90% ICH 286 10 % SiO₂ (pos) | 5 | 5 |
| 11 | 80 % ICH 286 10 % Aluminiumoxid C 10 % SiO₂ (pos) | 5 | 5 |
| 12 | 80 % ICH 286 10 % Dispal® 14R25 10 % SiO₂ (pos) | 5 | 5 |
| 8 C1 | 100 % ICH 286 | 9 | 5 |

Den Ergebnissen aus Tabelle 8 ist sofort zu entnehmen, dass alle geprüften Mischungen von ICH 286, Aluminiumoxid C, Dispal® 14R25 und SiO₂ (pos) (Beispiele 8 - 12) eine bessere Bildhomogenität zeigen als das Vergleichsbeispiele 8 C1, das nur ICH 286 enthält.

### Beispiel 13

Die Ergebnisse zur Bildhomogenität und zum Farbausbluten der Mischung von ICH 286 (Substanz aus Beispiel 1a) von EP 0'967'086) und Imogolit sind in Tabelle 9 zusammengestellt.

**Tabelle 9**

| Beispiel Nr. | System | Bildhomogenität | Farbausbluten |
|---|---|---|---|
| 13 | 97.7 % ICH 286 2.3 % Imogolit | 6 | 5 |
| 1 C1 | 100 % ICH 286 | 9 | 5 |

Den Ergebnissen aus Tabelle 9 ist sofort zu entnehmen, dass die Mischung von ICH 286 (Substanz aus Beispiel 1a) von EP 0'967'086) und Imogolit eine bessere Bildhomogenität zeigt als das Vergleichsbeispiel 1 C1, das allein ICH 286 enthält.

### Beispiel 14

Die Ergebnisse zur Bildhomogenität und zum Farbausbluten der Mischung von Aluminiumoxid C und Imogolit sind in Tabelle 10 zusammengestellt.

**Tabelle 10**

| Beispiel Nr. | System | Bildhomogenität | Farbausbluten |
|---|---|---|---|
| 14 | 97.7 % Aluminiumoxid C 2.3 % Imogolit C | 2 | 5 |
| 14 C1 | 100 % Aluminiumoxid C | 4 | 5 |

Den Ergebnissen aus Tabelle 10 ist sofort zu entnehmen, dass die Mischung von Aluminiumoxid C und Imogolit eine bessere Bildhomogenität zeigt als das Vergleichsbeispiel 14 C1, das allein Aluminiumoxid C enthält.

Die Schicht von Beispiel 14 ist wesentlich transparenter als die Schicht von Vergleichsbeispiel 14 C1 und zeigt eine deutlich geringere Tendenz zur Rissbildung.

### Beispiel 15

Die Ergebnisse zur Bildhomogenität und zum Farbausbluten der Mischung von ICH 277 (Substanz aus Beispiel 1a) von EP 0'875'394) und Aluminiumoxid C sind in Tabelle 11 zusammengestellt.

**Tabelle 11**

| Beispiel Nr. | System | Bildhomogenität | Farbausbluten |
|---|---|---|---|
| 15 | 20 % Aluminiumoxid C 80 % ICH 277 | 5 | 5 |
| 15 C1 | 100% ICH 277 | 8 | 5 |

Den Ergebnissen aus Tabelle 11 ist sofort zu entnehmen, dass die Mischung von Aluminiumoxid C und ICH 277 eine bessere Bildhomogenität zeigt als das Vergleichsbeispiel 15 C1, das allein ICH 277 (Substanz aus Beispiel 1a) von EP 0'875'394) enthält.

### Beispiel 16

Die Ergebnisse zur Bildhomogenität und zum Farbausbluten der Mischung von positiv geladenem Siliziumdioxid SiO₂ (pos) und Imogolit sind in Tabelle 12 zusammengestellt.

**Tabelle 12**

| Beispiel Nr. | System | Bildhomogenität | Farbausbluten |
|---|---|---|---|
| 16 | 96 % SiO₂ (pos) 4 % Imogolit | 5 | 5 |
| 16 C1 | 100 % SiO₂ (pos) | 12 | 5 |

Den Ergebnissen aus Tabelle 12 ist sofort zu entnehmen, dass die Mischung von positiv geladenem Siliziumdioxid SiO₂ (pos) und Imogolit eine viel bessere Bildhomogenität zeigt als das Vergleichsbeispiel 15 C1, das allein positiv geladenes Siliziumdioxid enthält.

Die Schicht von Beispiel 16 ist wesentlich transparenter als die Schicht von Vergleichsbeispiel 16 C1 und zeigt eine viel geringere Tendenz zur Rissbildung.

### Beispiel 17

Die Ergebnisse zur Bildhomogenität und zum Farbausbluten der Mischung von Aluminiumoxid C und Dispal® 14R25 sind in Tabelle 13 zusammengestellt.

**Tabelle 13**

| Beispiel Nr. | System | Bildhomogenität | Farbausbluten |
|---|---|---|---|
| 17 | 20 % Aluminiumoxid C 80 % Dispal® 14R25 | 12 | 2 |
| 17 C1 | 100 % Dispal® 14R25 | 35 | 1 |

Den Ergebnissen aus Tabelle 13 ist sofort zu entnehmen, dass die Mischung von Aluminiumoxid C und Dispal® 14R25 eine viel bessere Bildhomogenität und weniger Farbausbluten zeigt als das Vergleichsbeispiel 17 C1, das allein Dispal® 14R25 enthält.

### Beispiel 18

Die Ergebnisse zur Bildhomogenität und zum Farbausbluten der Mischung von positiv geladenem Siliziumdioxid und Dispal® 14R25 sind in Tabelle 14 zusammengestellt.

**Tabelle 14**

| Beispiel Nr. | System | Bildhomogenität | Farbausbluten |
|---|---|---|---|
| 18 | 10 % SiO₂ (pos) 90 % Dispal® 14R25 | 10 | 4 |
| 18 C1 | 100 % Dispal® 14R25 | 27 | 2 |

Den Ergebnissen aus Tabelle 14 ist sofort zu entnehmen, dass die Mischung von SiO₂ (pos) und Dispal® 14R2 eine bessere Bildhomogenität zeigt als das Vergleichsbeispiel 18 C1, das allein Dispal® 14R2 enthält.

Die Schicht von Beispiel 18 ist wesentlich transparenter als die Schicht von Vergleichsbeispiel 18 C1 und zeigt eine viel geringere Tendenz zur Rissbildung.

### Beispiel 19

Die Ergebnisse zur Bildhomogenität und zum Farbausbluten der Mischung von positiv geladenem Siliziumdioxid und Dispal® 14R25 sind in Tabelle 15 zusammengestellt.

**Tabelle 15**

| Beispiel Nr. | System | Bildhomogenität | Farbausbluten |
|---|---|---|---|
| 19 | 90 % SiO₂ (pos) 10 % Dispal® 14R25 | 9 | 5 |
| 19 C1 | 100 % SiO₂ (pos) | 1 | 5 |

Die Schicht von Beispiel 19 ist viel transparenter als die Schicht von Vergleichsbeispiel 19 C1, die viele Mikrorisse enthält und deshalb fast undurchsichtig ist.

Den Ergebnissen aus Tabelle 15 ist zu entnehmen, dass die Mischung von SiO₂ (pos) und Dispal® 14R25 eine schlechtere Bildhomogenität zeigt als das Vergleichsbeispiel 19 C1, das allein SiO₂ (pos) enthält. Der Grund dafür sind die vielen Mikrorisse, in denen die Tinten gut aufgenommen werden. Ein solches Material ist aber als durchsichtiges Material unbrauchbar.

### Beispiel 20

Die Ergebnisse zur Bildhomogenität und zum Farbausbluten der Mischung von positiv geladenem Siliziumdioxid und Aluminiumoxid C sind in Tabelle 16 zusammengestellt.

**Tabelle 16**

| Beispiel Nr. | System | Bildhomogenität | Farbausbluten |
|---|---|---|---|
| 20 | 80 % SiO₂ (pos) 20 % Aluminiumoxid C | 8 | 5 |
| 20 C1 | 100 % SiO₂ (pos) | 13 | 3 |

Den Ergebnissen aus Tabelle 16 ist sofort zu entnehmen, dass die Mischung von SiO₂ (pos) und Aluminiumoxid C eine bessere Bildhomogenität und weniger Farbausbluten zeigt als das Vergleichsbeispiel 20 C1, das allein SiO₂ (pos) enthält.

Die Schicht von Beispiel 20 ist wesentlich transparenter als die Schicht von Vergleichsbeispiel 20 C1.

### Beispiel 21

Die Ergebnisse zur Bildhomogenität und zum Farbausbluten der Mischung von positiv geladenem Siliziumdioxid und Aluminiumoxid C sind in Tabelle 17 zusammengestellt.

**Tabelle 17**

| Beispiel Nr. | System | Bildhomogenität | Farbausbluten |
|---|---|---|---|
| 21 | 20 % SiO₂ (pos) 80 % Aluminiumoxid C | 3 | 5 |
| 21 C1 | 100 % Aluminiumoxid C | 5 | 5 |

Den Ergebnissen aus Tabelle 17 ist sofort zu entnehmen, dass die Mischung von SiO₂ (pos) und Aluminiumoxid C eine bessere Bildhomogenität zeigt als das Vergleichsbeispiel 21 C1, das allein Aluminiumoxid C enthält.

### Beispiel 22

Die Ergebnisse zur Bildhomogenität und zum Farbausbluten der Mischung von negativ geladenem Siliziumdioxid Snowtex® Up und ICH 286 (Substanz aus Beispiel 1a) von EP 0'967'086) sind in Tabelle 18 zusammengestellt.

**Tabelle 18**

| Beispiel Nr. | System | Bildhomogenität | Farbausbluten |
|---|---|---|---|
| 22 | 5 % Snowtex® Up 95 % ICH 286 | 7 | 5 |
| 22 C1 | 100 % ICH 286 | 11 | 3 |
| 22 C2 | 100 % Snowte® Up | 30 | 1 |

Den Ergebnissen aus Tabelle 18 ist sofort zu entnehmen, dass die Mischung von negativ geladenem Siliziumdioxid Snowtex® Up und ICH 286 (Substanz aus Beispiel 1a) von EP 0'967'086) eine bessere Bildhomogenität und wesentlich weniger Farbausbluten zeigt als die Vergleichsbeispiele 21 C1 und 22 C2, die jeweils nur eine der beiden Mischungskomponenten enthalten.

### Beispiel 23

Die Doppelschichten zeigten keine Trübung an der Schichtgrenze, unabhängig davon, ob die beiden Giesslösungen einzeln nacheinander oder gemeinsam auf den Träger aufgebracht wurden. Nach dem Bedrucken war die Bildqualität gleich wie bei einem Vergleichsguss mit doppelt aufgebrachtem Unterguss. Die Doppelschichten waren aber wesentlich transparenter als die doppelt aufgebrachte Schicht des Untergusses.

## Patentansprüche

1. Aufzeichnungsmaterial für den Tintenstrahldruck, das auf einem Träger mindestens eine Tintenaufnahmeschicht bestehend aus einem oder mehreren Bindemitteln und einer Mischung verschiedener wasserunlöslicher, anorganischer Oxide der Elemente Aluminium oder Silizium, von Oxid/hydroxiden des Elements Aluminium oder von Aluminiumsilikaten aufweist, **dadurch gekennzeichnet, dass** mindestens eines dieser Oxide, Oxid/hydroxide oder Silikate ein Porenvolumen ≥ 40 ml / 100 g aufweist und in einer Menge von mindestens 8 % bezogen auf die Gesamtmenge der wasserunlöslichen, anorganischen Oxide, der Oxid/hydroxide oder der Aluminiumsilikate vorhanden ist, die Primärteilchen der Komponente mit dem grössten Volumen einen äquivalenten Kugeldurchmesser von weniger als 20 nm besitzen und die Primärteilchen der Komponente mit dem kleinsten Volumen einen äquivalenten Kugeldurchmesser haben, der grösser als ¹/20 des äquivalenten Kugeldurchmessers der Primärteilchen der Komponente mit dem grössten Volumen ist.

2. Aufzeichnungsmaterial gemäss Anspruch 1, **dadurch gekennzeichnet, dass** mindestens eines dieser Oxide, Oxid/hydroxide oder Silikate mit einem Porenvolumen ≥ 40 ml / 100 g in einer Menge von mindestens 40 % bezogen auf die Gesamtmenge der wasserunlöslichen, anorganischen Oxide, Oxid/hydroxide oder Aluminiumsilikate vorhanden ist.

3. Aufzeichnungsmaterial gemäss einem der Ansprüche 1 oder 2, **dadurch gekennzeichnet, dass** die Primärteilchen der Komponente mit dem grössten Volumen einen äquivalenten Kugeldurchmesser von weniger als 15 nm besitzen und die Primärteilchen der Komponente mit dem kleinsten Volumen einen äquivalenten Kugeldurchmesser haben, der grösser als ¹/10 des äquivalenten Kugeldurchmessers der Primärteilchen der Komponente mit dem grössten Volumen ist.

4. Aufzeichnungsmaterial gemäss den Ansprüchen 1 bis 3, **dadurch gekennzeichnet, dass** eine der Komponenten der Mischung kugelförmig und eine andere plättchenförmig ist.

5. Aufzeichnungsmaterial gemäss den Ansprüchen 1 bis 3, **dadurch gekennzeichnet, dass** eine der Komponenten der Mischung kugelförmig und eine andere stäbchenförmig ist.

6. Aufzeichnungsmaterial gemäss den Ansprüchen 1 bis 3, **dadurch gekennzeichnet, dass** eine der Komponenten der Mischung kugelförmig und eine andere faserförmig ist.

7. Aufzeichnungsmaterial gemäss den Ansprüchen 1 bis 3, **dadurch gekennzeichnet, dass** eine der Komponenten der Mischung plättchenförmig und eine andere faserförmig ist.

8. Aufzeichnungsmaterial gemäss den Ansprüchen 1 bis 7, **dadurch gekennzeichnet, dass** eine der Komponenten der Mischung Aluminiumoxid/hydroxid und eine andere γ- oder δ-Aluminiumoxid ist.

9. Aufzeichnungsmaterial gemäss den Ansprüchen 1 bis 7, **dadurch gekennzeichnet, dass** eine der Komponenten der Mischung Aluminiumoxid/hydroxid und eine andere Siliziumdioxid ist.

10. Aufzeichnungsmaterial gemäss den Ansprüchen 1 bis 7, **dadurch gekennzeichnet, dass** eine der Komponenten der Mischung γ- oder δ-Aluminiumoxid und eine andere Siliziumdioxid ist.

11. Aufzeichnungsmaterial gemäss den Ansprüchen 9 oder 10, **dadurch gekennzeichnet, dass** das Siliziumdioxid positiv geladen ist.

12. Aufzeichnungsmaterial gemäss den Ansprüchen 1 bis 7, **dadurch gekennzeichnet, dass** eine der Komponenten der Mischung γ- oder δ-Aluminiumoxid und eine andere Imogolit ist.

13. Aufzeichnungsmaterial gemäss den Ansprüchen 1 bis 7, **dadurch gekennzeichnet, dass** eine der Komponenten der Mischung positiv geladenes Siliziumdioxid und eine andere Imogolit ist.

14. Aufzeichnungsmaterial gemäss den Ansprüchen 1 bis 7, **dadurch gekennzeichnet, dass** eine der Komponenten der Mischung Aluminiumoxid/hydroxid und eine andere Imogolit ist.

15. Aufzeichnungsmaterial gemäss einem der Ansprüche 1 bis 9 oder 14, **dadurch gekennzeichnet, dass** das Aluminiumoxid/hydroxid die Elemente der Ordnungszahl 57 bis 71 in einer Menge zwischen 0.04 und 4.2 Molprozent bezogen auf Al₂O₃ enthält.

16. Aufzeichnungsmaterial gemäss einem der Ansprüche 1 bis 15, **dadurch gekennzeichnet, dass** als Bindemittel Gelatine, Polyvinylalkohol, Derivate des Polyvinylalkohols, Polyvinylpyrrolidon oder Mischungen dieser Verbindungen verwendet werden.

17. Pigmenthaltige Beschichtungsmasse zur Herstellung einer Tintenaufnahmeschicht für ein Aufzeichnungsmaterial für den Tintenstrahldruck gemäss den Ansprüchen 1 bis 16.

## Claims

1. A recording sheet for ink jet printing comprising a support having coated onto said support at least one ink receiving layer consisting of one or more binders and a mixture of different water insoluble, inorganic oxides of the elements aluminium or silicium, oxide/hydroxides of the element aluminium or aluminium silicates, **characterized in that** at least one of said oxides, oxides/hydroxides or silicates has a pore volume of ≥ 40 ml / 100 g and is present in an amount of at least 8 weight percent relative to the total amount of all the water insoluble, inorganic oxides, oxide/hydroxides or silicates and that the primary particles of the mixture component with the largest volume have an equivalent sphere diameter of less than 20 nm and the primary particles of the mixture component with the smallest volume have an equivalent sphere diameter that is at least 1/20 of the equivalent sphere diameter of the primary particles of the mixture component with the largest volume.

2. A recording sheet according to claim 1, **characterized in that** at least one of said oxides, oxides/hydroxides or silicates with a pore volume of ≥ 40 ml / 100 g is present in an amount of at least 40 weight percent relative to the total amount of all the water insoluble, inorganic oxides, oxide/hydroxides or silicates.

3. A recording sheet according to claims 1 or 2,**characterized in that** the primary particles of the mixture component with the largest volume have an equivalent sphere diameter of less than 15 nm and the primary particles of the mixture component with the smallest volume have an equivalent sphere diameter that is at least 1/10 of the equivalent sphere diameter of the primary particles of the mixture component with the largest volume.

4. A recording sheet according to claims 1 to 3, **characterized in that** one of the components of the mixture is of spherical shape and another one is of platelet shape.

5. A recording sheet according to claims 1 to 3, **characterized in that** one of the components of the mixture is of spherical shape and another one is of rod shape.

6. A recording sheet according to claims 1 to 3, **characterized in that** one of the components of the mixture is of spherical shape and another one is of fibre shape.

7. A recording sheet according to claims 1 to 3, **characterized in that** one of the components of the mixture is of platelet shape and another one is of fibre shape.

8. A recording sheet according to claims 1 to 7, **characterized in that** one of the components of the mixture is aluminium oxide/hydroxide and another one is γ- or δ-aluminium oxide.

9. A recording sheet according to claims 1 to 7, **characterized in that** one of the components of the mixture is aluminium oxide/hydroxide and another one is silicium dioxide.

10. A recording sheet according to claims 1 to 7, **characterized in that** one of the components of the mixture is γ- or δ-aluminium oxide and another one is silicium dioxide.

11. A recording sheet according to claims 9 or 10, **characterized in that** the silicium dioxide is positively charged.

12. A recording sheet according to claims 1 to 7, **characterized in that** one of the components of the mixture is γ- or δ-aluminium oxide and another one is imogolite.

13. A recording sheet according to claims 1 to 7, **characterized in that** one of the components of the mixture is positively charged silicium dioxide and another one is imogolite.

14. A recording sheet according to claims 1 to 7, **characterized in that** one of the components of the mixture is aluminium oxide/hydroxide and another one is imogolite.

15. A recording sheet according to anyone of claims 1 to 7 or 14, **characterized in that** the aluminium oxide/hydroxide contains one or more of the elements with atomic number 57 to 71 in a total amount of 0.04 to 4.2 mole percent relative to Al₂O₃.

16. A recording sheet according to claims 1 to 15, **characterized in that** the binder or binders are gelatine, polyvinyl alcohol, derivates of polyvinyl alcohol, polyvinyl pyrrolidone or mixtures thereof.

17. Pigment containing coating compositions for the preparation of ink receiving layers for recording sheets for ink jet printing according to claims 1 to 16.

## Revendications

1. Feuille d'enregistrement destinée à l'impression par jet d'encre comprenant, sur un support, une ou plusieurs couches réceptrices d'encre composées d'un ou plusieurs liants et un mélange de différents oxydes inorganiques, non solubles dans l'eau, des éléments aluminium ou silicium ou d'oxyde/hydroxydes de l'élément aluminium ou de silicates d'aluminium, **caractérisée en ce qu'**au moins un de ces oxydes, oxyde/hydroxydes ou silicates a un volume des pores ≥ 40 ml / 100 g et constitue au moins 8 % par rapport à la quantité totale des oxydes, oxyde/hydroxydes ou silicates d'aluminium inorganiques non solubles dans l'eau, que les particules primaires de la composante ayant le plus grand volume ont un diamètre équivalent sphérique de moins de 20 nm et que les particules primaires de la composante ayant le plus petit volume ont un diamètre équivalent sphérique plus grand que 1/20 du diamètre équivalent sphérique des particules primaires de la composante ayant le plus grand volume.

2. Feuille d'enregistrement selon la revendication 1, **caractérisée en ce qu'**au moins un de ces oxydes, oxyde/hydroxydes ou silicates ayant un volume des pores ≥ 40 ml / 100 g constitue au moins 40 % par rapport à la quantité totale des oxydes, oxyde/hydroxydes ou silicates d'aluminium inorganiques non solubles dans l'eau.

3. Feuille d'enregistrement selon une des revendications 1 ou 2, **caractérisée en ce que** les particules primaires de la composante ayant le plus grand volume ont un diamètre équivalent sphérique de moins de 15 nm et que les particules primaires de la composante ayant le plus petit volume ont un diamètre équivalent sphérique plus grand que 1/10 du diamètre équivalent sphérique des particules primaires de la composante ayant le plus grand volume.

4. Feuille d'enregistrement selon les revendications 1 à 3, **caractérisée en ce qu'**une des composantes du mélange a la forme de sphères et une autre la forme de paillettes.

5. Feuille d'enregistrement selon les revendications 1 à 3, **caractérisée en ce qu'**une des composantes du mélange a la forme de sphères et une autre la forme de baguettes.

6. Feuille d'enregistrement selon les revendications 1 à 3, **caractérisée en ce qu'**une des composantes du mélange a la forme de sphères et une autre la forme de fibres.

7. Feuille d'enregistrement selon les revendications 1 à 3, **caractérisée en ce qu'**une des composantes du mélange a la forme de paillettes et une autre la forme de fibres.

8. Feuille d'enregistrement selon les revendications 1 à 7, **caractérisée en ce qu'**une des composantes du mélange est l'oxyde/hydroxyde d'aluminium et une autre le γ- or δ-oxyde d'aluminium.

9. Feuille d'enregistrement selon les revendications 1 à 7, **caractérisée en ce qu'**une des composantes du mélange est l'oxyde/hydroxyde d'aluminium et une autre l'oxyde de silicium.

10. Feuille d'enregistrement selon les revendications 1 à 7, **caractérisée en ce qu'**une des composantes du mélange est le γ- or δ-oxyde d'aluminium et une autre l'oxyde de silicium.

11. Feuille d'enregistrement selon les revendications 9 ou 10, **caractérisée en ce que** l'oxyde de silicium est chargé positivement.

12. Feuille d'enregistrement selon les revendications 1 à 7, **caractérisée en ce qu'**une des composantes du mélange est le γ- or δ-oxyde d'aluminium et une autre l'imogolite.

13. Feuille d'enregistrement selon les revendications 1 à 7, **caractérisée en ce qu'**une des composantes du mélange est l'oxyde de silicium chargé positivement et une autre l'imogolite.

14. Feuille d'enregistrement selon les revendications 1 à 7, **caractérisée en ce qu'**une des composantes est l'oxyde/hydroxyde d'aluminium et une autre l'oxyde de silicium.

15. Feuille d'enregistrement selon une des revendications 1 à 9 ou 14, **caractérisée en ce qu** l'oxyde/hydroxyde d'aluminium contient 0.04 à 4.2 pour-cent molaires des éléments ayant les numéros atomiques 57 à 71 de la classification périodique des éléments par rapport à l'Al₂O₃.

16. Feuille d'enregistrement selon les revendications 1 à 15, **caractérisée en ce que** les liants sont la gélatine, l'alcool polyvinylique, les dérivées de l'alcool polyvinylique, la polyvinylpyrrolidone ou des mélanges de ces composés.

17. Enduit contenant des pigments pour la préparation d'une couche réceptrice d'encre d'une feuille d'enregistrement pour l'impression par jet d'encre selon les revendications 1 à 16.
